# EUROPEAN PATENT SPECIFICATION

(11) **EP 0 606 266 B1**
(45) Date of publication and mention of the grant of the patent: **16.04.1997**
(21) Application number: 92919463.7
(22) Date of filing: 01.09.1992
(51) Int. Cl.: B29C 57/10, B29C 65/10, B65B 51/10

(54) **HOT GAS HEATING DEVICE**
HEISSGAS-HEIZVORRICHTUNG
DISPOSITIF DE CHAUFFAGE A GAZ CHAUD

(30) Priority: 04.09.1991 SE 9102528
(43) Date of publication of application: 20.07.1994
(73) Proprietor: NORDEN PAC DEVELOPMENT AB, S-391 28 Kalmar (SE)
(72) Inventor: LINNER, Hans, S-392 36 Kalmar (SE)
(74) Representative: Mossmark, Anders
(86) International application number: SE9200598
(87) International publication number: WO9304844

(56) References cited:
- DE-C- 3 401 959
- DE-C- 3 448 188
- GB-A- 2 213 096

## Description

### FIELD OF THE INVENTION

The present invention relates to a hot gas heating device for heating an open end of a tubular body prior to it being heat sealed according to the preamble of claim 1. Such a device is known from DE-C-3 401 959.

### BACKGROUND OF THE INVENTION

The hot gas heating device described in DE-C-3 401 959 on which disclosure the preamble of independent claim 1 is based, is for heating the upper region of a plastic or laminate tube which is already closed at one end and filled with the product which it is to contain. The material of the upper inner wall region of the tube is heated to a temperature at which it becomes soft by means of hot gas exiting a heating nozzle placed within the upper wall region of the tube. To securely locate the tube during the heating phase, a centering sleeve having cooling means is provided in abutment with the outer upper region of the tube adjacent the heating nozzle. From the inner upper wall region which is to be the weld site, the hot gas flows into a collector housing from whence it is exhausted along a conduit. After the heating operation, the tube is transferred to a press station where the heated end region of the open tube is sealably closed by means of press jaws.

Whilst the above-described type of device has proved to be a popular alternative to conventional high frequency welding, contact heat jaw welding and radiation heat welding, it has until now not been possible to seal a tube in such a way that the exterior weld site is not visibly damaged by temperature fluctuations around the weld region. So as not to highlight the impaired finish of this region, preprinted tubes are used whose upper end region is kept free from print. Marketing forces have, however, created a need for a device which can successfully seal a tubular container without affecting the outer upper wall region of the tube in an unaesthetic manner, thereby allowing complete print coverage of the entire exterior surface of the tube.

A further hot air sealing device is disclosed in the document GB-A-2 213 096. In this document the device is also positioned in the open end of the tube and hot air is expelled therefrom. In an attempt to avoid contact of the outer wall of the tube with the apparatus, pressurised gas is supplied from a chamber below the end wall and this impinges onto the flexible tube. The tube is however always slightly non-circular in cross-section and the gas flow onto the tube wall and over the tube end is turbulent. Uneven heating of the tube end is the result.

### OBJECT OF THE INVENTION

It is therefore an object of the present invention to provide a device for heating the inner upper wall region of a tube in a controlled manner so as to obtain a more even temperature distribution in the heated region.

### SUMMARY OF THE INVENTION

This object is achieved according to the present invention by means of a hot gas heating device according to claim 1.

By creating a substantially uniform pressure drop radially around the end region of the tube, the applied hot gas flow can be more accurately controlled, thereby leading to a uniform distribution of the hot gas on the upper inner wall region of the tube.

Since, with the device according to the present invention, there is a very much more uniform temperature distribution at the intended weld site, any unsightly blemishes caused by "hot spots" or "chilled" areas are eliminated, therefore permitting the use of tubes with complete exterior surface print coverage.

Other advantageous embodiments of the present invention are detailed in the dependent claims.

### BRIEF DESCRIPTION OF THE DRAWINGS

The present invention will be described in more detail in the following with reference to the attached drawings, in which:
- FIG 1: is a schematic sectional view through a hot gas heating device according to a first embodiment of the present invention;
- FIG 2: is a schematic sectional view through a hot gas heating device according to a second embodiment of the present invention, and
- FIG 3: is a schematic sectional view through a hot gas heating device according to a third embodiment of the present invention.

### BEST MODE OF CARRYING OUT THE INVENTION

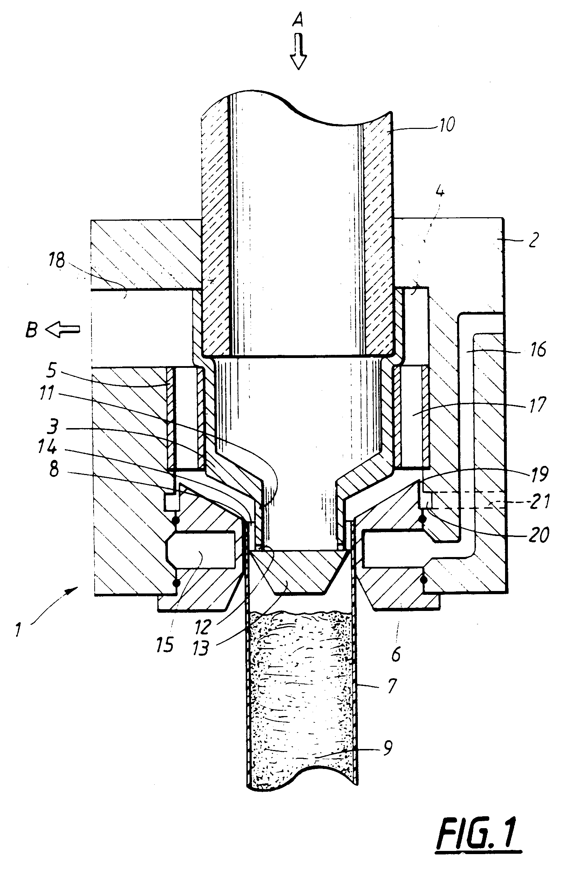

In Fig. 1, reference numeral 1 denotes a nozzle housing forming a part of one embodiment of the hot gas heating device according to the present invention. The nozzle housing is delimited by a casing 2 which is normally fabricated from several machined parts, though which has been shown in the drawings as a unitary construction for the sake of clarity. The casing is in the form of a sleeve, with an internal cavity 4 which accomodates a heating nozzle 3. The radial position of the heating nozzle is determined by a nozzle centering sleeve 5 which is carried by the casing 2. At the lower end of the casing 2, as shown in the drawings, there is arranged a cooling and centering ring 6, the purpose of which being to maintain a region of the outer wall of a tube 7 at a desired position and temperature.

The tube 7, which is to be heated in preparation for sealing, is filled via its open end 8 to a certain predetermined level by a product 9 in a not shown stage. The open tube end 8 and the heating nozzle 3 are brought to their relative position in Fig. 1 by way of not shown means for carrying out relative displacement between the tube 7 and the nozzle housing 1.

Hot gas, depicted by the letter A, is supplied to the heating nozzle 3 via a supply conduit 10 which enters the nozzle housing 1 via the upper open end of the casing 2 and communicates with the heating nozzle 3 in the cavity 4.

The heating nozzle 3 comprises a lower generally cylindrical end 11 having a circumferential outlet 12 for the hot air from the supply conduit 10. The outlet 12 may be in the form of one or more circumferentially extending slots or a plurality of holes placed circumferentially around the heating nozzle's cylindrical end 11. The outlet 12 is so shaped that hot gas is directed to a precise region of the upper inner surface of the tube wall. The dimensions of the cylindrical end 11 and the tube 7 are chosen so that a narrow circumferential slot 14 is formed between them, thereby allowing the hot gas to flow over this precisely defined region of the upper inner surface of the tube wall. Meanwhile, hot gas is hindered from propogating towards the product 9 in the tube 7 by means of a heat shield in the form of a flange 13 on the cylindrical end 11 of the heating nozzle 3.

To keep the size of the circumferential slot 14 as constant as possible, the outer upper end region of the tube 7 abuts the cooling and centering ring 6. As this term implies, cooling means are provided in the ring 6, preferably in the form of a circumferentially extending passage 15 in communication with at least one supply conduit 16 for a cooling medium such as water, air, etc. The cooling means provides for a well controlled environment at the external side of the heating region.

The hot gas, having heated the upper inner wall region of the tube, exits the circumferential slot 14 and flows through the lower region of the cavity 4 via through bores 17 in the nozzle centering ring 5 to the upper region of the cavity from whence it is exhausted in the direction of arrow B via an exhaust passage 18 in the casing of the nozzle housing 1.

The above-described arrangement corresponds by and large with that described in DE-C-3 401 959. In accordance with the present invention, however, the hot gas sealing device is provided with additional means for controlling the hot gas flow so as to create a uniform distribution of the hot gas on the inner upper wall of the tube. This is achieved according to the present invention by providing means for creating a substantially uniform pressure drop radially around the end of the tube. In the embodiments shown in the drawings, this means is in the form of a so-called gas ejector arrangement.

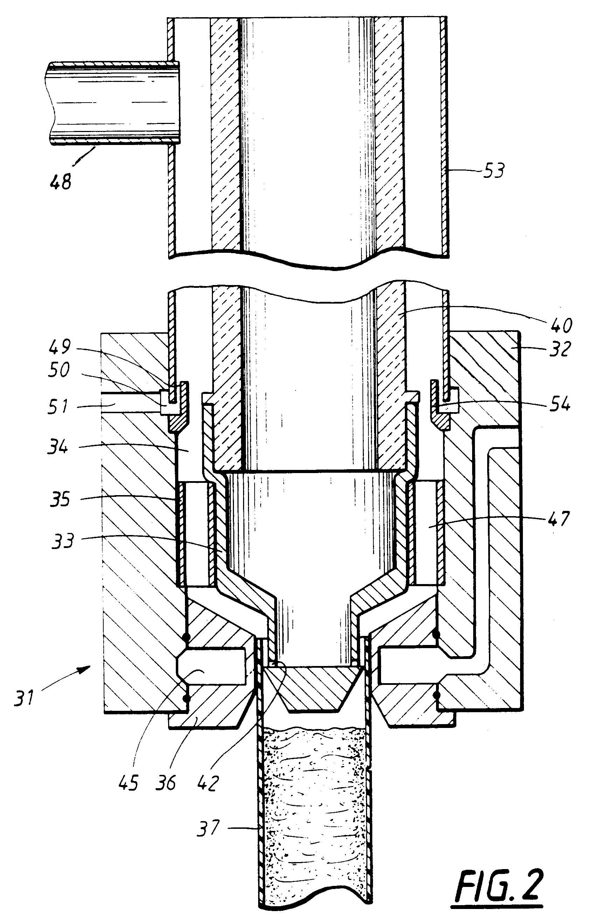

In the embodiments according to Figs. 1 and 2, the gas ejector arrangement is located within the nozzle housing 1. The gas ejector arrangement in the embodiment shown in Fig. 1 comprises a narrow, upwardly directed, circumferentially extending slot 19 communicating with a circumferentially extending groove 20 in the inner wall of the casing 2 at a location above the hot gas outlet 12 in the heating nozzle 3. The slot 19 is formed between the upper outer surface of the cooling and centering ring 6 and the inner surface of the casing 2 by, for example, machining down the outer diameter of the ring 6 over this region. The groove 20 serves as a manifold for the gas which is to be ejected through the slot 19 and which is supplied to the groove 20 by means of at least one passage 21 in the casing 2. The slot 19 and the groove 20 are so dimensioned that the ejected gas exits the slot 19 into the lower region of the cavity 4 at substantially uniform pressure at every point on the slot 19. The velocity of the ejected gas creates a venturi effect in the lower region of the cavity, thereby bringing about a relative pressure drop radially around the end of the tube 7. Since the ejected gas exits the slot 19 at substantially uniform pressure, it follows that the pressure drop around the container end will also be substantially uniform. Due to this pressure uniformity, a much more even distribution of the hot gas over the upper inner wall region of the tube 7 is obtained. This ensures that unacceptable temperature fluctuations in the heated wall region are avoided.

With reference to Fig. 2, reference numeral 31 denotes a nozzle housing comprising a casing 32, a heating nozzle 3 situated in a cavity 34, a nozzle centering sleeve 35 and a cooling and centering ring 36 for a tube 37, the cooling and centering ring being provided with a circumferentially extending passage 45 for a cooling medium.

The device according to Fig. 2 principally differs from that shown in Fig. 1 in that the means for creating a substantially uniform pressure drop radially around the end of the tube 37 is located higher up in the nozzle housing 31. More specifically, this means is located above a nozzle centering sleeve 35 which determines the radial position of the heating nozzle 33. Although shown in the drawing as a sleeve, it is to be understood that an extension of the casing 32 into the cavity 34 therein could serve the same purpose as the sleeve 35. The sleeve 35 is provided with a plurality of through bores 47 to allow the hot gas which has been applied to the upper inner surface of the tube 37 to flow up to a hot gas evacuation tube 53 at the upper region of the casing 32. The hot gas evacuation tube is concentric with both the longitudinal axis of the heating nozzle 33 and a hot gas supply conduit 40 through which hot gas is supplied to the heating nozzle. The hot gas evacuation tube 53 hereby delimits an annular, longitudinally extending continuation of the cavity 34 within the casing 32. The lower end of the hot gas evacuation tube 53 extends into the casing 32 and terminates at a predetermined distance above the nozzle centering sleeve 35. In this position, a lower end portion of the evacuation tube 53 partially covers a groove 50 formed in the inner wall of the casing 32. This groove 50 forms the manifold of a gas ejector arrangement and is supplied with gas via one or more supply conduits 51 passing radially through the casing wall. In the embodiment shown in Fig. 2, the annular gap 49 of the ejector arrangement is delimited on one side by the hot gas evacuation tube 53 and on the other side by the upper outer surface of a circumferentially extending ejector ring 54.

In operation, the annular ejector gas manifold 50 is supplied with gas via the supply conduit 51. This gas is ejected upwardly into the annular space delimited by the hot gas supply conduit 40 and the evacuation tube 53 through the circumferentially extending slot 49. The slot 49 and the manifold 50 are so dimensioned that the ejected gas exits the slot at substantially uniform pressure at every point on the slot. The velocity of the ejected gas creates a venturi effect in the lower region of the cavity 34, thereby bringing about a relative pressure drop radially around the end of the tube 37. As mentioned above in connection with the embodiment shown in Fig. 1, since the ejected gas exits the slot 49 at substantially uniform pressure, it follows that the pressure drop around the container end will also be substantially uniform. Due to this pressure uniformity, a much more even distribution of the hot gas over the upper inner wall region of the tube 37 is obtained.

The applied hot gas together with the ejected gas are exhausted via an exhaust passage 48 located higher up along the evacuation tube 53.

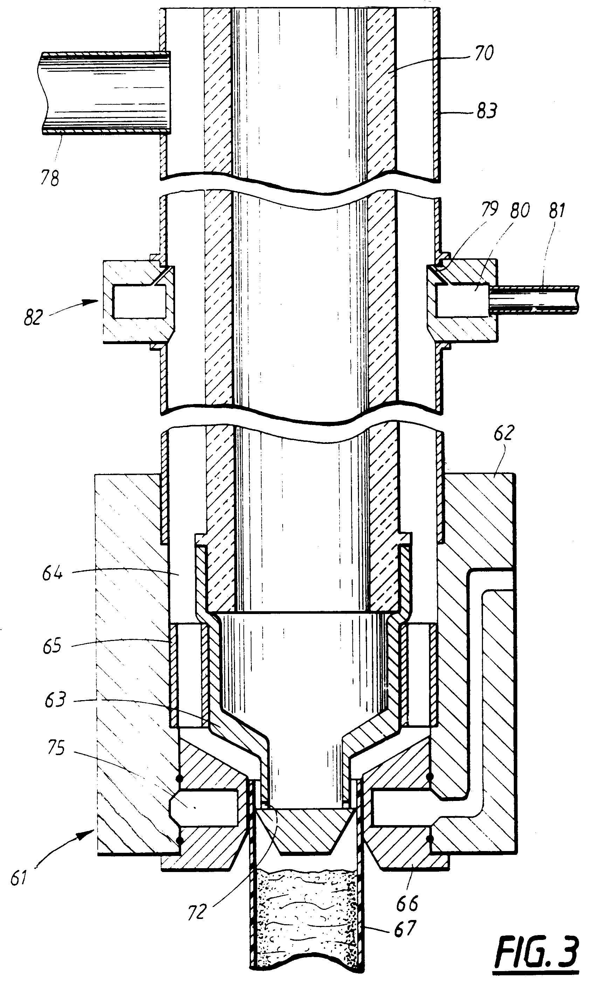

A further embodiment of the hot gas heating arrangement according to the present invention is shown in Fig. 3. Accordingly, reference numeral 61 denotes a nozzle housing comprising a casing 62, a heating nozzle 63 situated in a cavity 64, a nozzle centering sleeve 65 and a cooling and centering ring 66 for a tube 67. Again, the cooling and centering ring may be provided with a circumferentially extending passage 75 for a cooling medium.

The device according to Fig. 3 principally differs from that shown in Fig. 1 or Fig. 2 in that the means for creating a substantially uniform pressure drop radially around the end of the tube 37 is located exteriorally of the nozzle housing 61 in the form of an ejector arrangement 82 placed radially around and within a hot gas evacuation tube 83 surrounding the hot gas supply conduit 70 to the heating nozzle 63. As previously described with reference to Fig. 2, the hot gas evacuation tube 83 extends from within the casing 62 of the nozzle housing 61 and communicates with the cavity 64 therein. The hot gas evacuation tube is concentric with the longitudinal axis of the heating nozzle and thereby delimits an annular, longitudinally extending continuation of the cavity 64.

The ejector arrangement 82 comprises a ring-shaped housing incorporating an annular ejector gas manifold 80, supplied with the gas which is to be ejected via one or more supply conduits 81. This gas is ejected upwardly into the space between the hot gas supply conduit 70 and the evacuation tube 83 through a circumferentially extending slot 79. The slot 79 and the manifold 80 are, as in the previously described embodiments, so dimensioned that the ejected gas exits the slot 79 at substantially uniform pressure at every point on the slot 79. The velocity of the ejected gas creates a venturi effect in the lower region of the evacuation tube 83 and the cavity 64, thereby bringing about a relative pressure drop radially around the end of the tube 67. Again, since the ejected gas exits the slot 79 at substantially uniform pressure, it follows that the pressure drop around the container end will also be substantially uniform. Due to this pressure uniformity, a much more even distribution of the hot gas over the upper inner wall region of the tube 67 is obtained.

As in the embodiment according to Fig. 2, the applied hot gas together with the ejected gas are exhausted via an exhaust passage 78 located higher up along the evacuation tube 83.

Naturally, the present invention is not restricted to the embodiments shown in the drawings and described above, but may be varied within the scope of the following claims. For example, the ejector gas slot 19, 49,79 may be in the form of a plurality of holes. Furthermore, more than one slot can be provided, with an axial separation between the slots. In addition, more than one ejector arrangement can be provided, again with axial separation.

## Claims

1. Hot gas heating device for heating an upper open end region of a tubular body (7;37;67) prior to it being heat-sealed, said device comprising a nozzle housing (1;31;61) including a casing (2;32;62) accomodating a heating nozzle (3;33;63) in a cavity (4;34;64), which nozzle (3;33;63) can adopt a predetermined position within the tubular body so that a hot gas outlet (12;42;72) extending circumferentially around said nozzle can deliver hot gas to an upper inner wall region of said tubular body, said nozzle housing (1;31;61) further comprising a cooling and centering ring (6;36;66) surrounding the outer side of said upper inner wall region of the tubular body, the heating device also being provided with means (18,19,20,21;48,49,50,51;78,79,80,81) for exhausting the applied hot gas,
**characterized in** that said means are arranged so as to control the applied hot gas flow by creating a substantially uniform pressure drop around the upper wall region of the tubular body (7;37;67) using an ejector arrangement (19,20;49,50;79,80) extending circumferentially around a longitudinal axis of the device, which axis is coaxial with the longitudinal axis of the tubular body (7;37;67), thereby creating a uniform distribution of the hot gas on the inner wall region of the tubular body.

2. Hot gas heating device according to claim 1, **characterized in** that said ejector arrangement (19,20;49,50;79,80) comprises a circumferentially extending slot (19;49;79) in communication with a manifold (20;50;80) fed by at least one supply conduit (21;51;81) for gas which is to be ejected through said slot.

3. Hot gas heating device according to claim 2, **characterized in** that said ejector arrangement (19,20;49,50) is situated within the nozzle housing (1;31).

4. Hot gas heating device according to claim 3, **characterized in** that said manifold (20) is in the form of a groove in the inner wall of the casing (2) and that the slot is formed between the inner wall of the casing and the outer wall of the cooling and centering ring (6).

5. Hot gas heating device according to claim 3 or 4, **characterized in** that an exhaust passage (18) is provided in said nozzle housing (1) which extends substantially radially from said cavity (4) within the casing (2) to the exterior of said casing.

6. Hot gas heating device according to claim 3, **characterized in** that the heating nozzle (33) is supported within the casing (32) by radially extending nozzle centering means (35) provided with longitudinally extending through bores (47) and in that said ejector arrangement is situated above said centering means (35).

7. Hot gas heating device according to claim 6, **characterized by** a hot gas evacuation tube (53) which extends from within the casing (32) of the nozzle housing (31) and communicates with the cavity (34) therein.

8. Hot gas heating device according to claim 7, **characterized in** that said manifold (50) is in the form of a groove in the inner wall of the casing (32) and is in communication with the interior of the hot gas evacuation tube (53), and in that the slot (49) is formed between the inner surface of the evacuation tube (53) and an outer surface of a circumferentially extending ejector ring (54).

9. Hot gas heating device according to claim 2, **characterized in** that said ejector arrangement (79,80) is situated exteriorally of the nozzle housing (61).

10. Hot gas heating device according to claim 9, **characterized in** that said ejector arrangement (79,80) is situated around and within a hot gas evacuation tube (83) extending from within the casing (62) of the nozzle housing (61) and communicating with the cavity (64) therein.

11. Hot gas heating device according to claim 10, **characterized in** that the hot gas evacuation tube (83) is concentric with a longitudinally extending hot gas supply conduit (70) which supplies hot gas to the heating nozzle (63) in a direction along an extension of the longitudinal axis of the tubular body (67) and which evacuation tube (83) thereby delimits an annular, longitudinally extending continuation of the cavity (64).

12. Hot gas heating device according to any of claims 7, 8, 10 or 11, **characterized in** that the hot gas evacuation tube (53;83) is provided towards its end remote from the nozzle housing (31;61) with an exhaust passage (48;78).

## Patentansprüche

1. Heißgas-Heizvorrichtung zum Heizen eines oberen offenen Endbereichs eines röhrenförmigen Körpers (7; 37; 67), bevor er wärmeversiegelt wird, wobei die Vorrichtung ein Düsengehäuse (1; 31; 61) mit einem Gehäuse (2; 32; 62) zum Aufnehmen einer Heizdüse (3; 33; 63) in einem Hohlraum (4; 34; 64) aufweist, wobei die Düse (3; 33; 63) eine vorbestimmte Position innerhalb des röhrenförmigen Körpers annehmen kann, so daß ein Heißgasauslaß (12; 42; 72), der sich umfangsmäßig um die Düse erstreckt, Heißgas an einen oberen inneren Wandbereich des röhrenförmigen Körpers liefern kann, wobei das Düsengehäuse (1; 31; 61) weiterhin einen Kühl- und Zentrierring (6; 36; 66) aufweist, der die Außenseite des oberen inneren Wandbereichs des röhrenförmigen Körpers umgibt, wobei die Heizvorrichtung ebenfalls mit einer Einrichtung (18, 19, 20, 21; 48, 49, 50, 51; 78, 79, 80, 81) zum Abführen des angewendeten Heißgases versehen ist,
dadurch **gekennzeichnet,** daß
die Einrichtung derart gestaltet ist, daß sie den Strom vom verwendeten Heißgas durch Erzeugen eines im wesentlichen gleichförmigen Druckabfalls um den oberen Wandbereich des röhrenförmigen Körpers (7; 37; 67) unter Benutzung einer Ausstoßanordnung (19, 20; 49, 50; 79, 80), die sich umfangsmäßig um eine Längsachse der Vorrichtung erstreckt, steuert, wobei die Achse koaxial mit der Längsachse des röhrenförmigen Körpers (7; 37; 77) verläuft, um dadurch eine gleichförmige Verteilung des Heißgases auf dem inneren Wandbereich des röhrenförmigen Körpers zu erzeugen.

2. Heißgas-Heizvorrichtung nach Anspruch 1, dadurch gekennzeichnet, daß die Ausstoßanordnung (19, 20; 49, 50; 79, 80) einen umfangsmäßig verlaufenden Schlitz (19; 49; 79) in Kommunikation mit einem Verteiler (20; 50; 80), der durch zumindest eine Versorgungsleitung (21; 51; 81) für Gas versorgt wird, welches durch den Schlitz auszustoßen ist.

3. Heißgas-Heizvorrichtung nach Anspruch 2, dadurch gekennzeichnet, daß die Ausstoßanordnung (19, 20; 49, 50) innerhalb des Düsengehäuses (1; 31) liegt.

4. Heißgas-Heizvorrichtung nach Anspruch 3, dadurch gekennzeichnet, daß der Verteiler (20) in Form einer Nut in der inneren Wand des Gehäuses (2) vorliegt und daß der Schlitz zwischen der inneren Wand des Gehäuses und der äußeren Wand des Kühl- und Zentrierringes (6) gebildet ist.

5. Heißgas-Heizvorrichtung nach Anspruch 3 oder 4, dadurch gekennzeichnet, daß eine Abgaspassage (18) in dem Düsengehäuse (1) vorgesehen ist, welches sich im wesentlichen radial von dem Hohlraum (4) innerhalb des Gehäuses (2) zum Äußeren des Gehäuses erstreckt.

6. Heißgas-Heizvorrichtung nach Anspruch 3, dadurch gekennzeichnet, daß die Heizdüse (23) innerhalb des Gehäuses (32) durch eine sich radial erstreckende Düsenzentriereinrichtung (35) gehaltert ist, die mit sich in Längsrichtung erstreckenden Durchgangsbohrungen (47) versehen ist, und daß die Ausstoßanordnung oberhalb der Zentriereinrichtung (35) gelegen ist.

7. Heißgas-Heizvorrichtung nach Anspruch 6, gekennzeichnet durch eine Heißgas-Evakuierungsröhre (53), die sich von innerhalb des Gehäuses (32) des Düsengehäuses (31) erstreckt und mit dem Hohlraum (34) darin kommuniziert.

8. Heißgas-Heizvorrichtung nach Anspruch 7, dadurch gekennzeichnet, daß der Verteiler (50) in Form einer Nut in der inneren Wand des Gehäuses (32) vorliegt und in Kommunikation mit dem Inneren der Heißgas-Evakuierungsröhre (53) steht und daß der Schlitz (49) zwischen der inneren Oberfläche der Evakuierungsröhre (53) und einer äußeren Oberfläche eines sich umfangsmäßig erstreckenden Ausstoßrings (54) gebildet ist.

9. Heißgas-Heizvorrichtung nach Anspruch 2, dadurch gekennzeichnet, daß die Ausstoßanordnung (79, 80) außerhalb des Düsengehäuses (61) gelegen ist.

10. Heißgas-Heizvorrichtung nach Anspruch 9, dadurch gekennzeichnet, daß die Ausstoßanordnung (79, 80) um und innerhalb einer Heißgas-Evakuierungsröhre (83) gelegen ist, die sich von innerhalb des Gehäuses (62) des Düsengehäuses (61) erstreckt und mit dem Hohlraum (64) darin kommuniziert.

11. Heißgas-Heizvorrichtung nach Anspruch 10, dadurch gekennzeichnet, daß die Heißgas-Evakuierungsröhre (83) konzentrisch mit einer in Längsrichtung verlaufenden Heißgas-Versorgungsleitung (70) verläuft, welche Heißgas an die Heizdüse (63) in einer Richtung entlang eines Verlaufs der Längsachse des röhrenförmigen Körpers (67) zuführt, und daß die Evakuierungsröhre (83) dadurch eine ringförmige, in Längsrichtung verlaufende Fortführung des Hohlraums (64) begrenzt.

12. Heißgas-Heizvorrichtung nach einem der Ansprüche 7, 8, 10 oder 11, dadurch gekennzeichnet, daß die Heißgas-Evakuierungsröhre (53; 83) zu ihrem entfernt von dem Düsengehäuse (31; 61) liegenden Ende hin mit einer Abgaspassage (48; 78) versehen ist.

## Revendications

1. Dispositif de chauffage à gaz chaud destiné à chauffer la zone d'extrémité supérieure ouverte d'un corps tubulaire (7;37;67) thermosoudé, ledit dispositif comprenant un carter de buse (1;31;61) comportant un boîtier (2;32;62) logeantune buse de chauffage (3;33;63) dans une partie creuse (4;34;64), cette buse (3;33;63) pouvant adopter une position prédéterminée à l'intérieur du corps tubulaire de telle façon qu'un orifice de sortie de gaz chaud (12;42;72) s'étendant circonférenciellement autour de ladite buse peut fournir du gaz chaud à la zone supérieure de la paroi intérieure dudit corps tubulaire, ledit carter de buse (1;31;61) comprenant en outre un anneau de refroidissement et de centrage (6;36;66) entourant l'extérieur de ladite zone supérieure de la paroi intérieure du corps tubulaire, le dispositif de chauffage étant également pourvu de moyens ((18,19,20,21;48,49,50,51;78,79,80,81) destinés à l'échappement du gaz chaud utilisé,
**caractérisé** en ce que lesdits moyens sont aménagés de manière à contrôler la circulation du gaz chaud utilisé en créant une chute de pression sensiblement uniforme autour de la zone supérieure de la paroi du corps tubulaire (7;37;67) en utilisant un dispositif d'éjection (19,20;49,50;79,80) s'étendant circonférenciellement autour de l'axe longitudinal du dispositif, cet axe étant coaxial avec l'axe longitudinal du corps tubulaire (7;37;67), créant par ce moyen une répartition uniforme du gaz chaud sur la zone intérieure de la paroi du corps tubulaire.

2. Dispositif de chauffage à gaz chaud selon la revendication 1, **caractérisé** en ce que ledit dispositif d'éjection (19,20;49,50;79,80) comprend une fente s'étendant circonférenciellement (19;49;79) qui communique avec un collecteur (20;50;80) alimenté par au moins un conduit d'amenée (21;51;81) destiné au gaz devant être éjecté à travers ladite fente.

3. Dispositif de chauffage à gaz chaud selon la revendication 2, **caractérisé** en ce que ledit dispositif d'éjection ( 19,20;49,50) est situé à l'intérieur du carter de buse (1;31).

4. Dispositif de chauffage à gaz chaud selon la revendication 3, **caractérisé** en ce que ledit collecteur (20) se présente sous la forme d'une rainure située dans la paroi intérieure du boîtier (2) en ce que la fente est formée entre la paroi intérieure du boîtier et la paroi extérieure de l'anneau de refroidissement et de centrage (6).

5. Dispositif de chauffage à gaz chaud selon la revendication 3 ou 4, **caractérisé** en ce que ledit passage d'échappement (18) est présent dans ledit de carter de buse (1), lequel s'étend pratiquement radialement depuis ladite partie creuse (4) qui se trouve à l'intérieur du boîtier (2) pour aller vers l'extérieur dudit boîtier.

6. Dispositif de chauffage à gaz chaud selon la revendication 3, **caractérisé** en ce que la buse de chauffage (33) est supportée à l'intérieur du boîtier (32) par un moyen de centrage de buse s'étendant radialement (35), pourvu de trous traversants s'étendant longitudinalement (47) et en ce que ledit dispositif d'éjection est situé au dessus dudit moyen de centrage (35).

7. Dispositif de chauffage à gaz chaud selon la revendication 6, **caractérisé** par un tube d'évacuation de gaz chaud (53), lequel s'étend depuis l'intérieur du boîtier (32) du carter de buse (31) et communique avec la partie creuse (34) qui est à l'intérieur.

8. Dispositif de chauffage à gaz chaud selon la revendication 7, **caractérisé** en ce que ledit collecteur (50) se présente sous la forme d'une rainure qui se trouve dans la paroi intérieure du boîtier (32) et qui communique avec l'intérieur du tube d'évacuation de gaz chaud (53), et en ce que la fente (49) est formée entre la surface intérieure du tube d'évacuation (53) et la surface extérieure de l'anneau d'éjection s'étendant circonférenciellement (54).

9. Dispositif de chauffage à gaz chaud selon la revendication 2, **caractérisé** en ce que ledit dispositif d'éjection (79,80) est situé à l'extérieur du carter de buse (61).

10. Dispositif de chauffage à gaz chaud selon la revendication 9, **caractérisé** en ce que ledit dispositif d'éjection (79,80) est situé autour et à l'intérieur d'un tube d'évacuation de gaz chaud (83) s'étendant depuis l'intérieur du boîtier (62) du carter de buse (61) et communiquant avec la partie creuse (64) qui est à l'intérieur.

11. Dispositif de chauffage à gaz chaud selon la revendication 10, **caractérisé** en ce que le tube d'évacuation de gaz chaud (83) est concentrique avec un conduit d'amenée de gaz chaud s'étendant longitudinalement (70), lequel amène du gaz chaud jusqu'à la buse de chauffage (63) dans une direction au long d'une extension de l'axe longitudinal du corps tubulaire (67), ce tube d'évacuation (83) délimitant par ce moyen une continuation annulaire de la partie creuse (64) s'étendant longitudinalement.

12. Dispositif de chauffage à gaz chaud selon l'une quelconque des revendications 7, 8, 10 ou 11, **caractérisé** en ce que le tube d'évacuation de gaz chaud (53;83) est pourvu vers son extrémité éloignée du carter de buse (31;61) d'un passage d'échappement (48;78).
